# EUROPÄISCHE PATENTSCHRIFT

(11) **EP 0 750 834 B1**
(45) Veröffentlichungstag und Bekanntmachung des Hinweises auf die Patenterteilung: **02.02.2000**
(21) Anmeldenummer: 96105504.3
(22) Anmeldetag: 06.04.1996
(51) Int. Cl.: A01F 7/06, A01F 12/44

(54) **Selbstfahrender Mähdrescher**
Self-propelled combine
Moissonneuse-batteuse automotrice

(30) Priorität: 28.06.1995 DE 19523429; 24.02.1996 DE 19606989
(43) Veröffentlichungstag der Anmeldung: 02.01.1997
(73) Patentinhaber: Case Harvesting Systems GmbH, 01844 Neustadt (DE)
(72) Erfinder: Voss, Lothar, Dr.-Ing., 01844 Neustadt (DE); Hentsch, Wolfgang, Dipl.-Ing., 02625 Bautzen (DE); Eckert, Klaus, Dipl.-Ing., 02742 Neusalza-Spremberg (DE); Noack, Christian, Dipl.-Ing., 02694 Guttau (DE); Löbel, Wolf-Carsten, Dipl.-Ing., 02694 Malschwitz (DE); Windisch, Volker, Dipl.-Ing., 02692 Obergurig (DE)
(74) Vertreter: Müller, Lutz

(56) Entgegenhaltungen:
- EP-A- 0 230 276
- EP-A- 0 591 688
- DE-A- 1 962 110
- DE-A- 3 223 329
- DE-A- 4 023 894
- DE-A- 4 405 337
- FR-A- 2 058 646
- FR-A- 2 366 784
- FR-A- 2 549 344
- GB-A- 2 057 240
- GB-A- 2 174 282
- US-A- 3 794 046
- SOVIET PATENT ABSTRACTS Section PQ, Week 9404 16.März 1994 Derwent Publications Ltd., London, GB; Class P12, AN 94-032828 XP002012968 & SU-A-1 785 605 (ROSTSELMASH) , 7.Januar 1993

## Beschreibung

Die Erfindung bezieht sich auf einen selbstfahrenden Mähdrescher mit einem Schneidwerk, einer Drescheinrichtung, einem Strohseparator und einer Reinigungseinrichtung, wobei die Drescheinrichtung in einem schwenkbaren Gehäuse angeordnet ist, das sich an das Schneidwerk anschließt und mit diesem verbunden ist.

Aus der DE 40 23 894 C2 ist bereits ein Axialflußmähdrescher bekannt, der mehrere längs zur Fahrtrichtung angeordnete Dresch- und Trenntrommeln aufweist, die zwischen dem Schneidwerk und der Reinigungseinrichtung in einem Gehäuse angeordnet sind, das mit dem Maschinenrahmen schwenkbar verbunden und im Bereich zwischen den lenkbaren Vorderrädern angebracht ist. Der Einzugsbereich der Dresch- und Trenntrommeln schließt sich unmittelbar an den Abgabebereich der Halmförderschnecke des Schneidwerkes an. Im Auswurfbereich der Dresch- und Trenntrommeln sind seitliche Abgabeöffnungen für das Stroh angeordnet. Das am Dresch- und Trennkorb abgeschiedene Korn-Spreu-Gemisch gelangt in einer zwischen und unterhalb der beiden Dresch- und Trenntrommeln angeordneten Förderschnecke bis zur Reinigungseinrichtung, die als rotierende Reinigung ausgebildet ist. Die Spreu- und Kurzstrohteile werden von einem am Ende der Reinigungseinrichtung angeordneten Gebläse abgesaugt und auf den Feldboden geleitet. Die gereinigten Körner werden in einen oberhalb der Hinterachse befindlichen Korntank gefördert. Die Leistungsfähigkeit dieses Mähdreschers wird durch den möglichen Durchsatz der Dresch- und Trenntrommeln sowie durch die eingesetzte rotierende Reinigungseinrichtung bestimmt. Obwohl die Drescheinrichtung noch über Leistungsreserven verfügt, ist mit der verwendeten Reinigungseinrichtung keine weitere Leistungssteigerung möglich, so daß diese Maschinenkonzeption nur für Mähdrescher mit einer mittleren Durchsatzleistung geeignet ist.

Der Erfindung liegt die Aufgabe zugrunde, einen Mähdrescher mit einer hohen Durchsatzleistung zu entwickeln, der sowohl über eine leistungsstarke Drescheinrichtung als auch über eine dieser Leistung angepaßte Reinigungseinrichtung verfügt.

Erfindungsgemäß wird dies dadurch gelöst, daß das an den Dresch- und Trenntrommeln der Drescheinrichtung und am Strohseparator abgeschiedene Erntegutgemisch über den Gutstrom aufteilende Fördereinrichtungen der Reinigungseinrichtung zuführbar ist und daß die Reinigungseinrichtung zwei separate, in zwei verschiedenen Ebenen angeordnete untere und obere Reinigungseinrichtungen aufweist, wobei die Fördereinrichtungen so angebracht sind, daß die beiden Reinigungseinrichtungen mit je einer Teilmenge des gesamten Erntegutgemisches beschickbar sind.
Die Fördereinrichtungen sind so angeordnet, daß die beiden Reinigungseinrichtungen vorzugsweise etwa je mit der Hälfte des gesamten Erntegutgemisches beschickbar sind.

Nach weiteren Merkmalen der Erfindung ist der aus zwei Dresch- und Trenntrommeln bestehenden Drescheinrichtung eine gemeinsame, quer vor diesen angeordnete Übergabetrommel mit am Umfang angebrachten, den Erntegutstrom in zwei Teilströme aufteilenden Leisten angeordnet. Unterhalb des Strohabgabebereiches der Drescheinrichtung ist ein quer zur Fahrtrichtung angeordneter Strohseparator angebracht, wobei das an den Seitenbereichen austretende Stroh auf den Feldboden austragbar ist. An beiden Seitenbereichen des Strohseparators sind Häckseleinrichtungen angeordnet. An die Häckselbereiche schließen sich zum Feldboden gerichtete Auswurfkanäle an, die das Stroh direkt auf den Feldboden oder auf Strohschnecken abgeben. Unterhalb des abgabeseitigen Endes der Drescheinrichtung und des Abscheidebereiches des Strohseparators ist ein umlaufender Kratzerförderer angeordnet, der sich bis zum Aufgabebereich der sich daran anschließenden Fördereinrichtungen zu den Reinigungseinrichtungen erstreckt.
Die Fördereinrichtungen zu den beiden Reinigungseinrichtungen bestehen aus mehreren längs zur Fahrtrichtung nebeneinander angeordneten Zuführungsschnecken, wobei mindestens je eine Zuführungsschnecke oberhalb des Aufgabebereiches der unteren und oberen Reinigungseinrichtung endet. Die Zuführungsschnecken erstrecken sich vom Abgabeende des Kratzerförderers bis zu den Aufgabebereichen der unteren und oberen Reinigungseinrichtung.

Nach einer anderen Ausführung erstrecken sich die Zuführungsschnecken durchgängig vom abgabeseitigen Ende der Drescheinrichtung und des Abscheidebereiches des Strohseparators bis zu den Aufgabebereichen der unteren und oberen Reinigungseinrichtung. Die untere Reinigungseinrichtung wird über mindestens eine axial geradlinig verlaufende Zuführungsschnecke und die obere Reinigungseinrichtung über mindestens eine mit einem Knickgelenk versehene Zuführungsschnecke beschickt.

Das am Obersieb der oberen Reinigungseinrichtung nicht abgeschiedene Gutgemisch wird den Obersieben der unteren Reinigungseinrichtung zugeführt. Das am Obersieb der unteren Reinigungseinrichtung nicht abgeschiedene Gutgemisch wird über einen Elevator zu einem Wurfförderer geleitet. Das den Wurfförderer verlassende Gut wird der oberen Reinigungseinrichtung zugeführt.

Durch die erfindungsgemäße Lösung wird ein Mähdrescher mit einer hohen Leistungsfähigkeit der Dresch- und Reinigungseinrichtung geschaffen. Die vorteilhafte Ausbildung und Anordnung der einzelnen Funktionsbaugruppen ermöglicht eine kompakte Bauweise und die Einhaltung der zulässigen Außenabmessungen bei Transportfahrten auf öffentlichen Straßen.

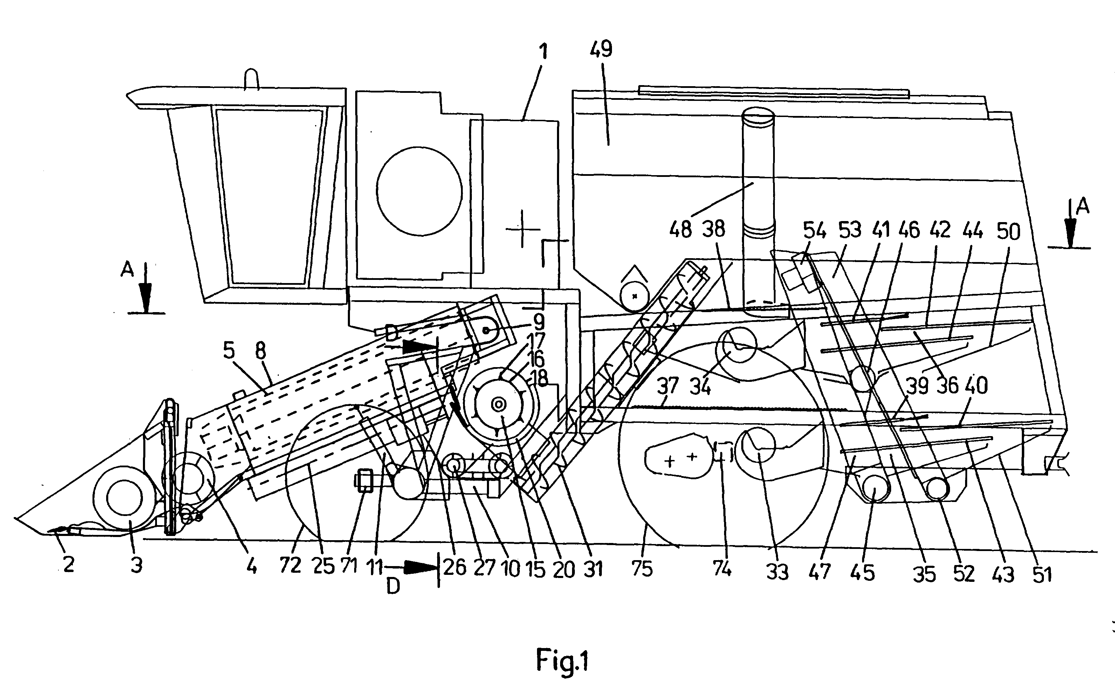

Die Erfindung wird nachstehend an einem Ausführungsbeispiel mit mehreren Varianten näher erläutert. In der zugehörigen Zeichnung zeigen
- Fig. 1: eine schematische Darstellung eines Mähdreschers mit zwei Reinigungseinrichtungen und je einer Zuführungsschnecke in einem teilweisen Längsschnitt,

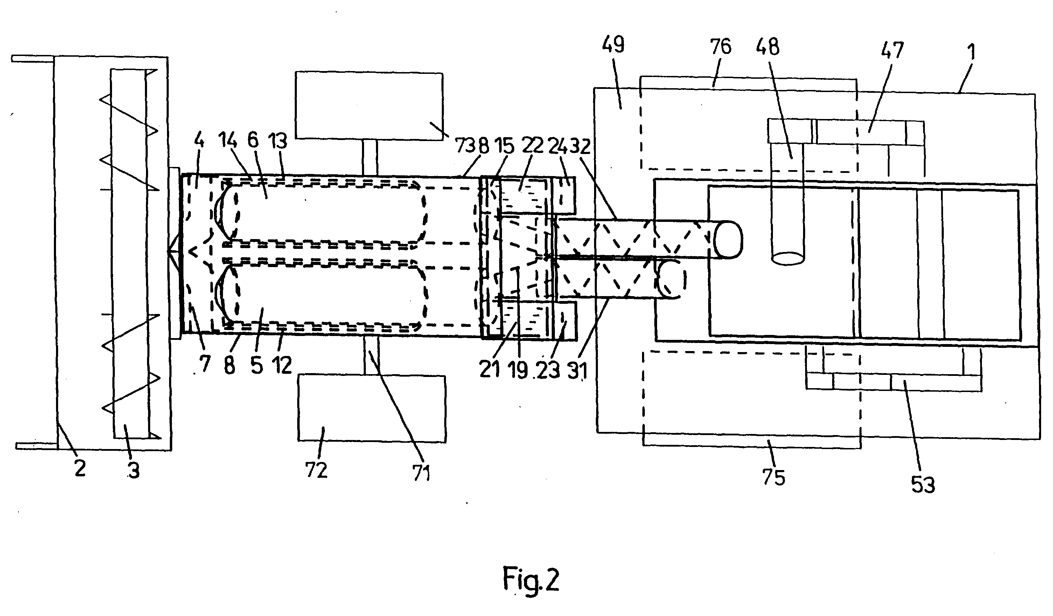

- Fig. 2: den Schnitt A-A nach Fig. 1,
- Fig. 3: eine andere Variante eines Mähdreschers mit je zwei Zuführungsschnecken zu den Reinigungseinrichtungen,
- Fig. 4: den Schnitt B-B nach Fig. 3,
- Fig. 5: den Schnitt C-C nach Fig. 3,
- Fig. 6: den Schnitt D-D nach Fig. 1,
- Fig. 7: eine weitere Variante eines Mähdreschers mit je zwei Zuführungsschnecken zu den Reinigungseinrichtungen,
- Fig. 8: den Schnitt E-E nach Fig. 7,
- Fig. 9: den Schnitt F-F nach Fig. 7.

Bei dem in der Zeichnung dargestellten Axialflußmähdrescher 1 gelangt das Erntegut vom Schneidwerk 2 über eine Halmförderschnecke 3 und eine Übergabetrommel 4 zur Drescheinrichtung, die aus zwei längs zur Fahrtrichtung angeordneten Dresch- und Trenntrommeln 5, 6 besteht. Die Übergabetrommel 4 weist an ihrem Umfang den Erntegutstrom mittig teilende und fördernde Leisten 7 auf, die das Erntegut vom Mittelteil der Halmförderschnecke 3 zu den unteren Eingangsbereichen der Dresch- und Tenntrommeln 5, 6 leiten. Gemeinsam mit den Dresch- und Trenntrommeln 5, 6 ist die Übergabetrommel 4 in einem Gehäuse 8 angeordnet, das um eine Achse 9 schwenkbar mit dem Maschinenrahmen 10 verbunden ist. Die Achse 9 ist zugleich die Eingangswelle für das Antriebsgetriebe der Dresch- und Trenntrommeln 5, 6. Das Schneidwerk 2 ist mit dem Gehäuse 8 lösbar verbunden. Das Heben und Senken des Schneidwerkes 2 erfolgt über Hydraulikzylinder 11, die zwischen dem Maschinenrahmen 10 und dem Gehäuse 8 angeordnet sind. Das Ausdreschen des Erntegutes und das Trennen der Korn- und Strohbestandteile geschieht im Bereich der Dresch- und Trenntrommeln 5, 6 im Verlauf der Förderbewegung zwischen den Dreschleisten und den Dresch- und Trennkörben 12, 13 in einem Ringkanal 14. Unterhalb des Abgabebereiches der Drescheinrichtung ist für das aus den beiden Ringkanälen 14 austretende Stroh ein quer zur Fahrtrichtung angeordneter Strohseparator 15 angebracht. Er besteht aus einer angetriebenen Trommel 16 mit am Umfang angeordneten Förderleisten 17. Die Trommel 16 ist im oberen Bereich von einer Abdeckung 18 umgeben, an deren Innenseite Führungsleisten 19 angeordnet sind. Im unteren Bereich ist die Trommel 16 von einem Abscheidekorb 20 umschlossen. Das Stroh gelangt von den beiden Dresch- und Trenntrommeln 5, 6 in zwei voneinander getrennten Gutströmen zu der Einlauföffnung des Strohseparators 15. Das in tangentialer Richtung in den Spalt zwischen der rotierenden Trommel 16 und dem Abscheidekorb 20 eingeführte Stroh wird an der Oberfläche der Trommel 16 durch die Wirkung der Führungsleisten 19 an der Abdeckung 18 und der Förderleisten 17 an der Trommel 16 nach mehreren Umlaufbewegungen von der Mitte aus nach beiden Seitenbereichen gefördert, an denen Häckseleinrichtungen 21, 22 angeordnet sind.

Das gehäckselte Stroh gelangt in tangentialer Richtung über die sich an die Häckseleinrichtungen 21, 22 anschließenden Auswurfkanäle 23, 24 auf den Feldboden. Die Häckseleinrichtungen 21, 22 können ein Bestandteil des angetriebenen Strohseparators 15 oder als selbständige Baugruppe mit einem eigenen Antrieb ausgebildet sein.
Sofern keine Strohhäckselung erfolgen soll, ist es auch möglich, die Häckseleinrichtungen 21, 22 außer Betrieb zu setzen. In diesem Fall gelangt das Stroh ungehäckselt aus dem Strohseparator 15 auf den Feldboden. Bei beiden Varianten verläßt das Stroh nach dem Passieren des Strohseparators 15 den Mähdrescher und belastet somit nicht mehr die nachgeordneten Baugruppen.
Das an den Dresch- und Trennkörben 12, 13 abgeschiedene KornSpreu-Kurzstroh-Gemisch gelangt in unterhalb von den Dresch- und Trennkörben 12, 13 angeordneten Längsförderschnecken 25 an deren abgabeseitigen Enden über ein Leitblech 26 auf einen umlaufenden Kratzerförderer 27. An dessen Umlenkwelle sind beidseitig vom Kratzerförderer 27 Schneckenförderer 28, 29 angeordnet, die das Erntegutgemisch von den Seitenbereichen zum Kratzerförderer 27 transportieren. Auf diesem gelangt das an den Dresch- und Trennkörben 12, 13 und am Abscheidekorb 20 des Strohseparators 15 abgeschiedene Erntegutgemisch gemeinsam zum Aufgabebereich von zwei in Fahrtrichtung angeordneten und schräg nach oben verlaufenden unterschiedlichen langen und parallel zueinander angebrachten Zuführungsschnecken 31, 32. Diese fördern das Erntegutgemisch zu zwei separaten und räumlich voneinander getrennten, in zwei verschiedenen Ebenen übereinander angeordneten Reinigungseinrichtungen. Anstelle der Zuführungsschnecken 31, 32 können auch andere Fördereinrichtungen, wie beispielsweise Ketten- oder pneumatische Förderer, verwendet werden.
Die beiden Reinigungseinrichtungen sind von bekannter Bauart und sind prinzipiell gleichartig oder verschieden ausgeführt. Auch die beiden Gebläse 33, 34 sind vorzugsweise baugleich ausgebildet. Sie werden über einen gemeinsamen Keilriemenvariator angetrieben. Damit keine gegenseitige Beeinflussung der Gebläse 33, 34 erfolgen kann, sind die Luftansaug- und Ausblasräume voneinander getrennt angeordnet.

Der Schwingantrieb der beiden Siebkästen erfolgt zwecks Masseausgleich gegenläufig über einen Ketten- oder Zahnriementrieb.
Während von den beiden unterschiedlich langen Zuführungsschnecken 31, 32 das Abgabeende der kurzen Zuführungsschnecke 31 oberhalb der unteren Reinigungseinrichtung 35 endet, fördert die lange Zuführungsschnecke 32 das Erntegutgemisch zur oberen Reinigungseinrichtung 36. Das Erntegutgemisch gelangt zunächst von den Zuführungsschnecken 31, 32 auf die schwingbeweglichen Förderböden 37, 38 und von diesen auf die Obersiebe 39, 40, 41, 42 und die Untersiebe 43, 44. Die abgeschiedenen Körner werden über Körnerschnecken 45, 46 und einen sich daran anschließenden Körnerelevator 27 zu einer Füllschnecke 48 und über diese in den Korntank 49 gefördert. Die Körnerschnecke 46 der oberen Reinigungseinrichtung 36 ist mit dem Körnerelevator 47 verbunden, so daß die an der unteren und oberen Reinigungseinrichtung 35, 36 abgeschiedenen Körner über den gemeinsamen Körnerelevator 47 in den Korntank 49 gefördert werden. Das am Obersieb 42 nicht abgeschiedene Gutgemisch gelangt über einen Rücklaufboden 50 zu den Obersieben 39, 40 der unteren Reinigungseinrichtung 35 und wird dort einem nochmaligen Trennvorgang unterzogen. Das am Ende des Obersiebes 40 noch nicht abgeschiedene Erntegutgemisch wird als Überkehr über einen Rücklaufboden 51, eine Förderschnecke 52 und einen Elevator 53 zu einem Wurfförderer 54 geleitet, dessen Abwurfstelle oberhalb des Förderbodens 38 angeordnet ist. Das den Wurfförderer 54 verlassende Gut gelangt über den Förderboden 38 zu der oberen Reinigungseinrichtung 36, in der ein nochmaliges Trennen erfolgt.

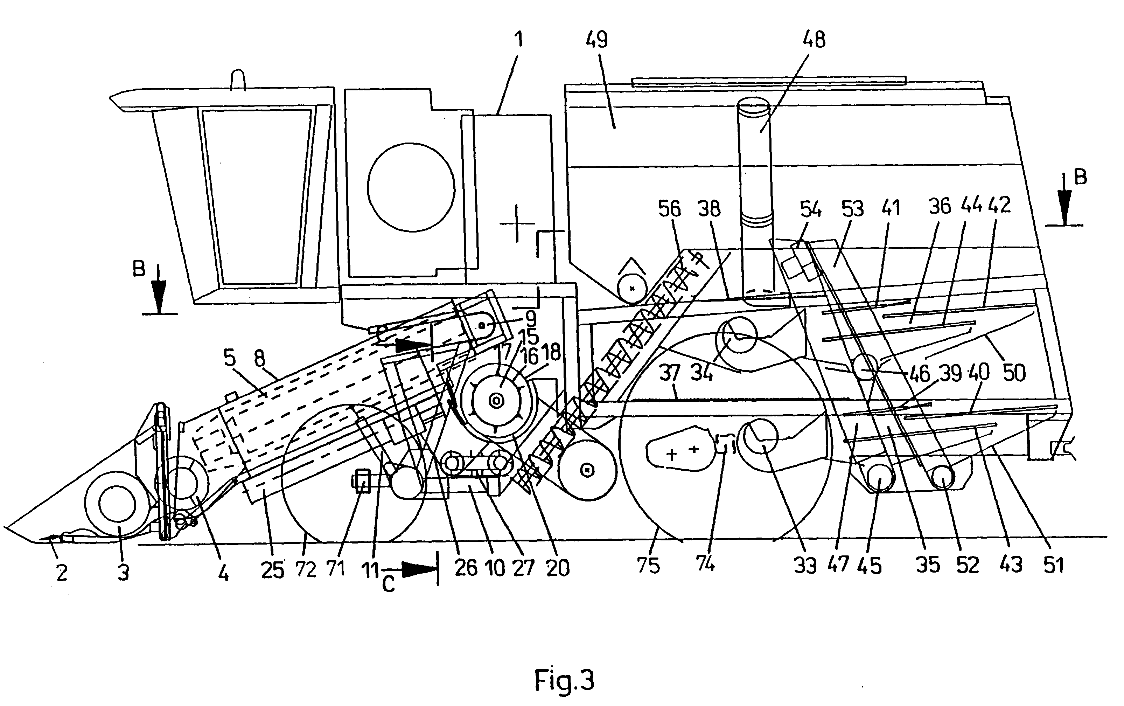

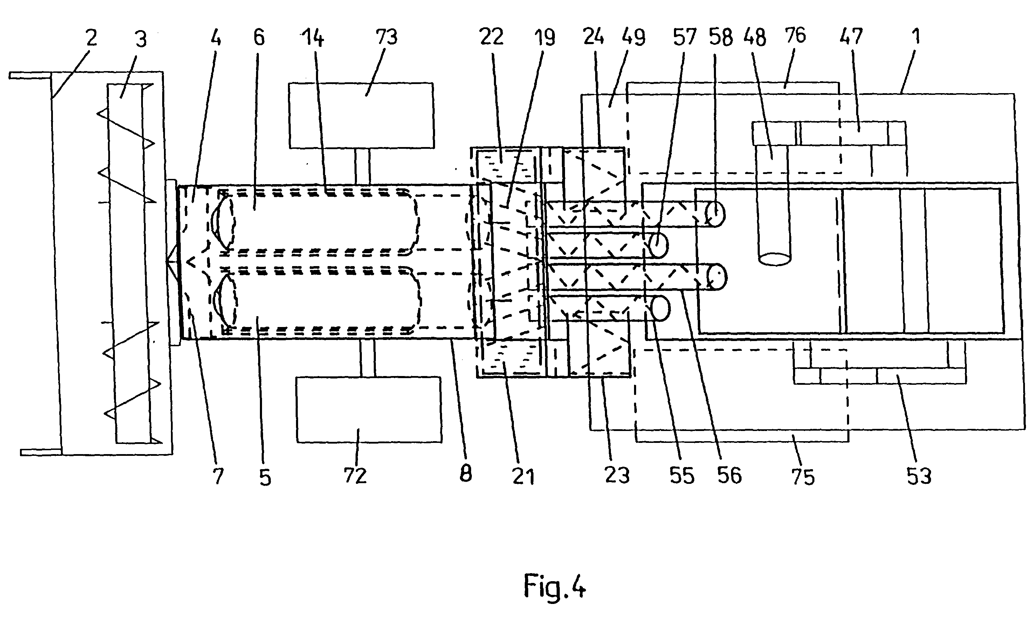

Nach der in den Fig. 3 und 4 dargestellten Variante erfolgt der Fördervorgang von der Drescheinrichtung zu den beiden Reinigungseinrichtungen 35, 36 mit vier Zuführungsschnecken 55, 56, 57, 58, wobei das Erntegut jeweils von zwei Zuführungsschnecken 55, 57 zur unteren Reinigungseinrichtung 35 und von zwei Zuführungsschnecken 56, 58 zur oberen Reinigungseinrichtung 36 gefördert wird. Die nebeneinanderliegenden Zuführungsschnecken 55, 56, 57, 58 sind dabei so angeordnet, daß jeweils abwechselnd eine Zuführungsschnecke 55, 57 die untere und die danebenliegende Zuführungsschnecke 56, 58 die obere Reinigungseinrichtung 36 beschickt. Dadurch wird eine gleichmäßige Gutverteilung über die gesamte Breite der Reinigungseinrichtungen 35, 36 erreicht.

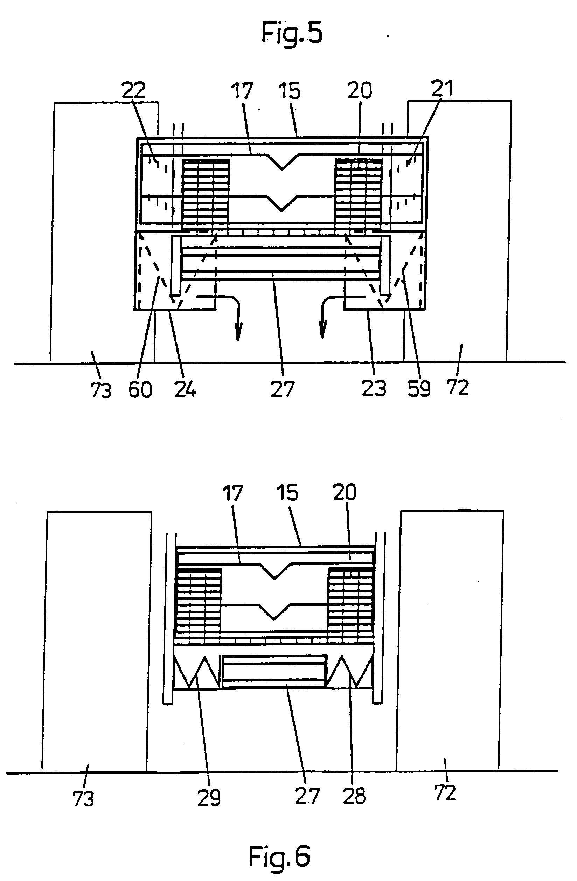

Bei der Variante mit vier Zuführungsschnecken 55, 56, 57, 58 (Fig. 5) erstreckt sich der Kratzerförderer 27 über die gesamte Breite aller vier Zuführungsschnecken 55, 56, 57, 58. Der Strohseparator 15 ragt über die lichte Breite des Maschinenrahmens 10 hinaus. Die seitlichen Auswurfkanäle 23, 24 leiten das Stroh auf parallel zum Strohseparator 15 verlaufende Strohschnecken 59, 60, die das Stroh zur Mitte fördern und es innerhalb der Spurbreite in einem gemeinsamen Schwad auf dem Feldboden ablegen. Diese Ausführung des Strohseparators 15 ist prinzipiell auch beim Einsatz von zwei Zuführungsschnecken 31, 32 zu den Reinigungseinrichtungen 35, 36 möglich.

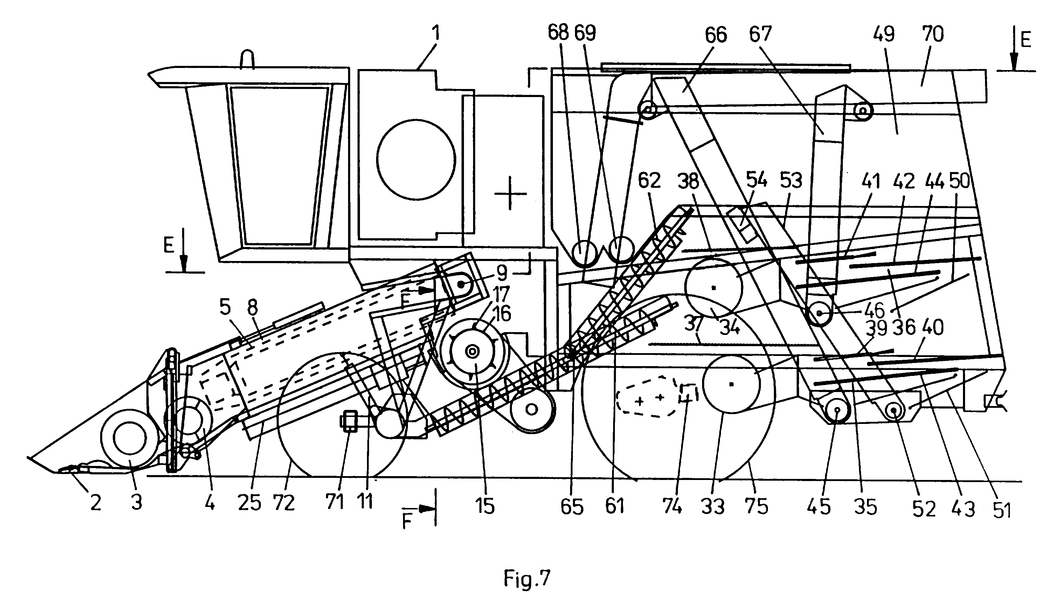

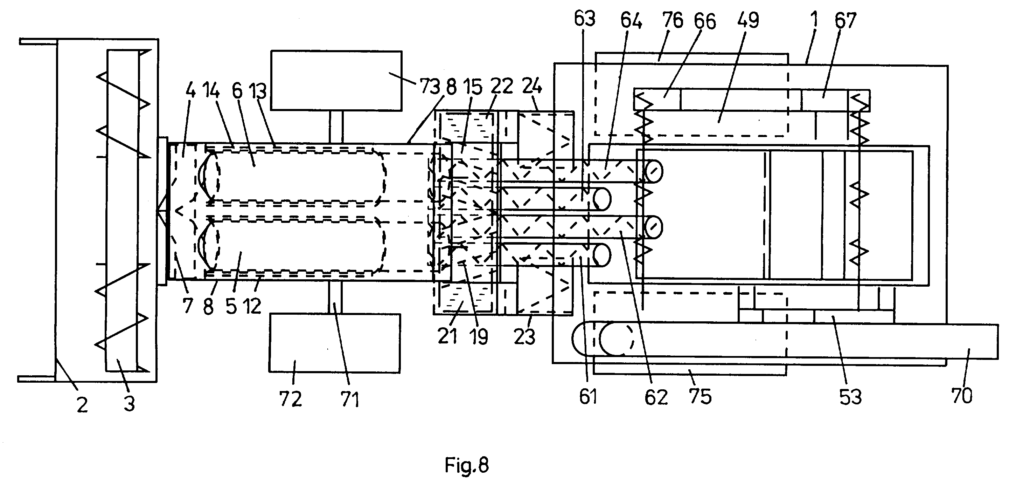

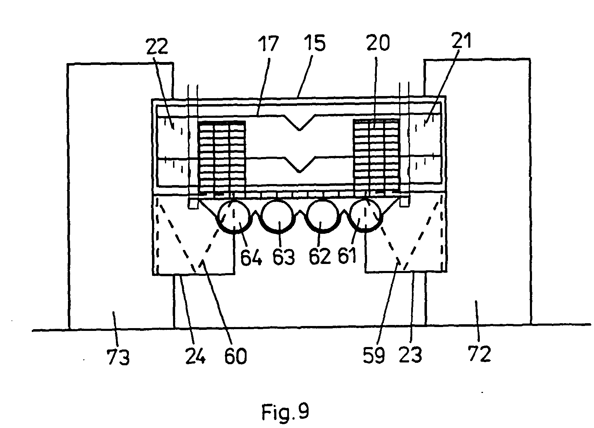

Bei der in den Fig. 7, 8 und 9 dargestellten Ausführungsvariante gelangt das an den Dresch- und Trennkörben 12, 13 sowie am Abscheidekorb 20 des Strohseparators 15 abgeschiedene Erntegutgemisch direkt auf Zuführungsschnecken 61, 62, 63, 64, die das Gemisch zu den Reinigungseinrichtungen 35, 36 fördern. Diese Zuführungsschnecken 61, 62, 63, 64 sind unterhalb des abgabeseitigen Endes der Drescheinrichtung und des Abscheidebereiches des Strohseparators 15 in Fahrtrichtung schräg nach oben verlaufend angeordnet, wobei die abgabeseitigen Enden oberhalb des Aufgabebereiches der Reinigungseinrichtungen 35, 36 enden. Während zwei axial geradlinige Zuführungsschnecken 61, 63 das Erntegutgemisch zur unteren Reinigungseinrichtung 35 fördern, wird über zwei, mit je einem Knickgelenk 65 versehene Zuführungsschnecken 62, 64 die obere Reinigungseinrichtung 36 beschickt. Nach dem Abscheidevorgang an den Obersieben 39, 40, 41, 42 und an den Untersieben 43, 44 werden die Körner über die Körnerschnecken 45, 46 und zugeordnete separate Körnerelevatoren 66, 67 in den Korntank 49 gefördert. Die beiden Körnerelevatoren 66, 67 sind dabei so angeordnet, daß mit jeweils einem Körnerelevator 66 die vordere Hälfte und mit einem Körnerelevator 67 die hintere Hälfte des Korntanks 49 mit Körnern beschickt wird. Dadurch wird eine gleichmäßige Befüllung des Korntanks 49 über dessen gesamte Länge erreicht. Das Abtanken der Körner aus dem Korntank 49 erfolgt über mehrere, längs zur Fahrtrichtung am Korntankboden angeordnete Förderschnecken und quer dazu verlaufende Austragschnecken 68, 69 sowie über eine schwenkbare Abtankschnecke 70.

Das Fahrwerk des Mähdreschers ist vorzugsweise mit einer pendelnden Vorderachse 71 mit lenkbaren Vorderrädern 72, 73 und einer starr am Maschinenrahmen 10 befestigten Hinterachse 74 mit nichtlenkbaren Hinterrädern 75, 76 ausgerüstet. Der Radantrieb erfolgt mechanisch oder hydrostatisch. Während bei der Arbeit auf dem Feld ein Allradantrieb zuschaltbar ist, werden bei der Fahrt auf der Straße nur die Vorderräder 72, 73 oder Hinterräder 75, 76 angetrieben. Nach einer anderen Ausführung ist auch ein permanenter Allradantrieb möglich.

### Bezugszeichenliste

- 1: Axialflußmähdrescher
- 2: Schneidwerk
- 3: Halmförderschnecke
- 4: Übergabetrommel
- 5, 6: Dresch- und Trenntrommel
- 7: Leisten
- 8: Gehäuse
- 9: Achse
- 10: Maschinenrahmen
- 11: Hydraulikzylinder
- 12, 13: Dresch- und Trennkörbe
- 14: Ringkanal
- 15: Strohseparator
- 16: Trommel
- 17: Förderleisten
- 18: Abdeckung
- 19: Führungsleisten
- 20: Abscheidekorb
- 21, 22: Häckseleinrichtungen
- 23, 24: Auswurfkanäle
- 25: Längsförderschnecke
- 26: Leitblech
- 27: Kratzerförderer
- 28, 29: Schneckenförderer
- 31, 32: Zuführungsschnecken
- 33, 34: Gebläse
- 35: untere Reinigungseinrichtung
- 36: obere Reinigungseinrichtung
- 37, 38: Förderböden
- 39, 40, 41, 42: Obersiebe
- 43, 44: Untersiebe
- 34, 46: Körnerschnecken
- 47: Körnerelevator
- 48: Füllschnecke
- 49: Korntank
- 50: Rücklaufboden
- 51: Rücklaufboden
- 52: Förderschnecke
- 53: Elevator
- 54: Wurfförderer
- 55, 56, 57, 58: Zuführungsschnecken
- 59, 60: Strohschnecken
- 61, 62, 63, 64: Zuführungsschnecken
- 65: Knickgelenk
- 66, 67: Körnerelevatoren
- 68, 69: Austragschnecken
- 70: Abtankschnecke
- 71: Vorderachse
- 72, 73: Vorderräder
- 74: Hinterachse
- 75, 76: Hinterräder

## Patentansprüche

1. Selbstfahrender Mähdrescher mit einem Schneidwerk (2), einer Drescheinrichtung (5,6), einem Strohseparator (15) und einer Reinigungseinrichtung, wobei die Drescheinrichtung in einem schwenkbaren Gehäuse angeordnet ist, das sich an das Schneidwerk anschließt und mit diesem verbunden ist, dadurch gekennzeichnet, daß das an den Dresch- und Trenntrommeln (5, 6) der Drescheinrichtung und am Strohseparator (15) abgeschiedene Erntegutgemisch über den Gutstrom aufteilende Fördereinrichtungen der Reinigungseinrichtung zuführbar ist und daß die Reinigungseinrichtung zwei separate, in zwei verschiedenen Ebenen angeodnete untere und obere Reinigungseinrichtungen (35, 36) aufweist, wobei die Fördereinrichtungen so angeordnet sind, daß die beiden Reinigungseinrichtungen (35, 36) mit je einer Teilmenge des gesamten Erntegutgemisches beschickbar sind.

2. Selbstfahrender Mähdrescher nach Anspruch 1, dadurch gekennzeichnet, daß die Fördereinrichtungen so angeordnet sind, daß die beiden Reinigungseinrichtungen (35, 36) etwa je mit der Hälfte des gesamten Erntegutgemisches beschickbar sind.

3. Selbstfahrende Mähdrescher nach Anspruch 1, dadurch gekennzeichnet, daß der aus zwei Dresch- und Trenntrommeln (5, 6) bestehenden Drescheinrichtung eine gemeinsame, quer vor diesen angeordnete Übergabetrommel (4) mit am Umfang angebrachten, den Erntegutstrom in zwei Teilströme aufteilenden Leisten (7) angeordnet ist.

4. Selbstfahrender Mähdrescher nach Anspruch 1 und 3, dadurch gekennzeichnet, daß unterhalb des Strohabgabebereiches der Drescheinrichtung ein quer zur Fahrtrichtung angeordneter Strohseparator (15) angebracht ist, wobei das an den Seitenbereichen austretende Stroh auf den Feldboden austragbar ist.

5. Selbstfahrender Mähdrescher nach Anspruch 1 und 4, dadurch gekennzeichnet, daß an beiden Seitenbereichen des Strohseparators (15) Häckseleinrichtungen (21, 22) angeordnet sind und daß sich an die Häckselbereiche Auswurfkanäle (23, 24) anschließen.

6. Selbstfahrender Mähdrescher nach Anspruch 1, 2 und 4 dadurch gekennzeichnet, daß unterhalb des abgabeseitigen Endes der Drescheinrichtung und des Abscheidebereiches des Strohseparators (15) ein umlaufender Kratzerförderer (27) angeordnet ist, der sich bis zum Aufgabebereich der sich daran anschließenden Fördereinrichtungen zu den Reinigungseinrichtungen (35, 36) erstreckt.

7. Selbstfahrender Mähdrescher nach Anspruch 1, 2 und 6, dadurch gekennzeichnet, daß die Fördereinrichtungen zu den beiden Reinigungseinrichtungen (35, 36) aus mehreren längs zur Fahrtrichtung nebeneinander angeordneten Zuführungsschnecken bestehen, wobei mindestens je eine Zuführungsschnecke oberhalb des Aufgabebereiches der unteren und oberen Reinigungseinrichtung (35, 36) endend angeordnet ist.

8. Selbstfahrender Mähdrescher nach Anspruch 1, 2, 6 und 7, dadurch gekennzeichnet, daß sich die Zuführungsschnecken (31, 32, 55, 56, 57, 58) vom Abgabeende des Kratzerförderers (27) bis zu den Aufgabebereichen der unteren und oberen Reinigungseinrichtung (35, 36) erstrecken.

9. Selbstfahrender Mähdrescher nach den Ansprüchen 1, 2 und 7, dadurch gekennzeichnet, daß sich die Zuführungsschnecken (61, 62, 63, 64) durchgängig vom abgabeseitigen Ende der Drescheinrichtung und des Abscheidebereiches des Strohseparators (15) bis zu den Aufgabebereichen der unteren und oberen Reinigungseinrichtung (35, 36) erstrecken.

10. Selbstfahrender Mähdrescher nach den Ansprüchen 1, 2, 7 und 9, dadurch gekennzeichnet, daß die untere Reinigungseinrichtung (35) über mindestens eine axial geradlinig verlaufende Zuführungsschnecke (61, 63) und die obere Reinigungseinrichtung (36) über mindestens eine mit einem Knickgelenk (65) versehene Zuführungsschnecke (62, 64) beschickbar ist.

11. Selbstfahrender Mähdrescher nach Anspruch 1 und 2, dadurch gekennzeichnet, daß das am Obersieb (42) der oberen Reinigungseinrichtung (36) nicht abgeschiedene Gutgemisch den Obersieben (39, 40) der unteren Reinigungseinrichtung (35) zuführbar ist.

12. Selbstfahrender Mähdrescher nach den Ansprüchen 1, 2 und 11, dadurch gekennzeichnet, daß das am Ende des Obersiebes (40) der unteren Reinigungseinrichtung (35) nicht abgeschiedene Gutgemisch über einen Elevator (53) zu einem Wurfförderer (54) leitbar ist und daß das den Wurfförderer (54) verlassende Gut der oberen Reinigungseinrichtung (36) zuführbar ist.

13. Selbstfahrender Mähdrescher nach den Ansprüchen 1 und 2, dadurch gekennzeichnet, daß der unteren und oberen Reinigungseinrichtung (35, 36) je ein separater Körnerelevator (66, 67) zugeordnet ist, wobei mit einem Körnerelevator (66) die vordere Hälfte und mit einem Körnerelevator (67) die hintere Hälfte des Korntanks (49) beschickbar ist.

## Claims

1. Self-propelling harvester with a cutting mechanism (2), threshing equipment (5, 6), a straw separator (15) and cleaning equipment, wherein the threshing equipment is arranged at a pivotable housing, which adjoins the cutting mechanism and is connected therewith, characterised in that the harvested material mixture separated off at the threshing and separating drums (5, 6) of the threshing equipment and at the straw separator (15) is feedable by way of the conveying devices, which divide up the material flow, of the cleaning equipment and that the cleaning equipment comprises two separate lower and upper cleaning devices (35, 36) arranged in two different planes, wherein the conveying devices are so arranged that the two cleaning devices (35, 36) are each loadable with a respective part quantity of the total harvested material mixture.

2. Self-propelling harvester according to claim 1, characterised in that the conveying devices are so arranged that the two cleaning devices (35, 36) are each loadable with about a half of the total harvested material mixture.

3. Self-propelling harvester according to claim 1, characterised in that arranged at the threshing equipment, which consists of two threshing and separating drums (5, 6), is a common transfer drum (4), which is arranged transversely in front thereof, with strips (7) mounted at the circumference and dividing up the harvested material flow into two part flows.

4. Self-propelling harvester according to claim 1 and 3, characterised in that a straw separator (15) arranged transversely to the travel direction is mounted below the straw delivery region of the threshing equipment, wherein the straw issuing at the side regions is dischargeable onto the ground.

5. Self-propelling harvester according to claim 1 and 4, characterised in that chopping devices (21, 22) are arranged at both side regions of the straw separator (15) and that thrower channels (23, 24) are connected to the chopping regions.

6. Self-propelling harvester according to claim 1, 2 and 4, characterised in that a circulating waste conveyor (27) is arranged below the delivery end of the threshing equipment and the separating region of the straw separator (15) and extends up to the infeed region of the conveying devices, which are connected thereto, to the cleaning devices (35, 36).

7. Self-propelling harvester according to claim 1, 2 and 6, characterised in that the conveying devices to the two cleaning devices (35, 36) consist of several feed worms arranged adjacent to one another longitudinally relative to the travel direction, wherein at least one respective feed worm is arranged to end above the infeed region of each of the lower and the upper cleaning device (35, 36).

8. Self-propelling harvester according to claim 1, 2, 6 and 7, characterised in that the feed worms (31, 32, 55, 56, 57, 58) extend from the delivery end of the waste conveyor (27) up to the infeed regions of the lower and the upper cleaning device (35, 36).

9. Self-propelling harvester according to claims 1, 2 and 7, characterised in that the feed worms (61, 62, 63, 64) extend continuously from the delivery end of the threshing equipment and the separating region of the straw separator (15) up to the infeed regions of the lower and the upper cleaning device (35, 36).

10. Self-propelling harvester according to claims 1, 2, 7 and 9, characterised in that the lower cleaning device (35) is loadable by way of at least one feed worm (61, 63) extending axially rectilinearly and the upper cleaning device (36) is loadable by way of at least one feed worm (62,64) provided with a flexible joint (65).

11. Self-propelling harvester according to claim 1 and 2, characterised in that material mixture not separated off at the upper sifter (42) of the upper cleaning device (36) is feedable to the upper sifters (39, 40) of the lower cleaning device (35).

12. Self-propelling harvester according to claims 1, 2 and 11, characterised in that material mixture which is not separated off can be conducted at the end of the upper sifter (40) of the lower cleaning device (35) by way of an elevator (53) to a thrower (54) and that the material leaving the thrower (54) is feedable to the upper cleaning device (36).

13. Self-propelling harvester according to claims 1 and 2, characterised in that a separate grain elevator (66, 67) is associated with each of the lower and the upper cleaning device (35, 36), wherein the front half of the grain tank (49) is loadable by one grain elevator (66) and the rear half of the grain tank (49) is loadable by one grain elevator (67).

## Revendications

1. Moissonneuse-batteuse automotrice comprenant un mécanisme de fauche (2), une installation de battage (5, 6), un séparateur de paille (15) et une installation de nettoyage, l'installation de battage étant logée dans un boîtier susceptible de pivoter, faisant suite au mécanisme de fauche et reliée à celui-ci,
caractérisée en ce que
le mélange de produits récoltés séparé au niveau des tambours de battage et de séparation (5, 6) de l'installation de battage et du séparateur de paille (15) est fourni à des installations de transfert et de répartition de l'installation de nettoyage par le flux de produits et
l'installation de nettoyage comporte deux dispositifs de nettoyage (35, 36) distincts, situés dans deux plans distincts, un dispositif de nettoyage inférieur (35) et un dispositif de nettoyage supérieur (36)
les installations de transfert étant montées pour que les deux dispositifs de nettoyage (35, 36) puissent recevoir chaque fois une quantité partielle de l'ensemble du mélange de produits récoltés.

2. Moissonneuse-batteuse automotrice selon la revendication 1,
caractérisée en ce que
les installations de transfert sont disposées pour que les deux dispositifs de nettoyage (35, 36) reçoivent sensiblement chacun la moitié de l'ensemble du mélange de produits récoltés.

3. Moissonneuse-batteuse automotrice selon la revendication 1,
caractérisée en ce que
l'installation de battage, formée de deux tambours de battage et de séparation (5, 6), comporte un tambour de transfert (4), commun, qui se trouve en amont de l'installation de battage, et qui comporte des baguettes de répartition du flux de produits récoltés en deux flux partiels, ces baguettes 7 étant prévues à la périphérie du tambour.

4. Moissonneuse-batteuse automotrice selon les revendications 1 et 3,
caractérisée en ce qu'
en dessous de la plage de sortie de paille de l'installation de battage, un séparateur de paille (15) est disposé transversalement à la direction de déplacement, la paille qui tombe sur le champ sortant des zones latérales.

5. Moissonneuse-batteuse automotrice selon les revendications 1 et 4,
caractérisée en ce que
sur les deux plages latérales du séparateur de paille (15) il y a des hacheurs (21, 22) et des canaux d'éjection (23, 24) qui se raccordent aux zones de hachage.

6. Moissonneuse-batteuse automotrice selon les revendications 1, 2 et 4,
caractérisée en ce qu'
en dessous de l'extrémité de sortie de l'installation de battage et de la zone de séparation du séparateur de paille (15), il y a un convoyeur à raclette périphérique (27) qui s'étend jusque dans la zone de sortie des installations de transfert adjacentes vers les dispositifs de nettoyage (35, 36).

7. Moissonneuse-batteuse automotrice selon les revendications 1, 2 et 6,
caractérisée en ce que
les installations de transfert comportent plusieurs vis d'alimentation juxtaposées, dirigées longitudinalement par rapport à la direction de déplacement et reliées aux deux installations de nettoyage (35, 36), au moins chacune comporte une vis d'alimentation se terminant au-dessus de la zone d'émission de l'installation de nettoyage inférieure et supérieure (35, 36).

8. Moissonneuse-batteuse automotrice selon les revendications 1, 2, 6 et 7,
caractérisée en ce que
les vis d'alimentation (31, 32, 55, 56, 57, 58) s'étendent entre l'extrémité de sortie du convoyeur de raclage (27) jusqu'aux zones à traiter du dispositif de nettoyage inférieur et supérieur (35, 36).

9. Moissonneuse-batteuse automotrice selon les revendications 1, 2 et 7,
caractérisée en ce que
les vis d'alimentation (61, 62, 63, 64) s'étendent en continu de l'extrémité de sortie de l'installation de battage et de la zone de séparation du séparateur de paille (15) jusque dans les zones de réception du dispositif de nettoyage inférieur et du dispositif de nettoyage supérieur (35, 36).

10. Moissonneuse-batteuse automotrice selon les revendications 1, 2, 7 et 9,
caractérisée en ce que
le dispositif de nettoyage inférieur (35) est alimenté par au moins une vis d'alimentation axiale rectiligne (61, 63) et le dispositif de nettoyage supérieur (36) est alimenté par au moins une vis d'alimentation (62, 64) munie d'un coude articulé (65).

11. Moissonneuse-batteuse automotrice selon les revendications 1 et 2,
caractérisée en ce que
le mélange de produits non séparé sur le tamis supérieur (42) de l'installation de nettoyage supérieure (36) est appliqué au tamis supérieur (39, 40) du dispositif de nettoyage inférieur (35).

12. Moissonneuse-batteuse automotrice selon les revendications 1, 2 et 11,
caractérisée en ce que
le produit mélangé qui n'est pas séparé à la fin du tamis supérieur (40) de l'installation de nettoyage inférieure (35) est conduit par un élévateur (53) vers un convoyeur éjecteur (54) et le produit qui quitte le convoyeur éjecteur (54) est fourni au dispositif de nettoyage supérieur (36).

13. Moissonneuse-batteuse automotrice selon les revendications 1 et 2,
caractérisée en ce que
les installations de nettoyage inférieure et supérieure (35, 36) comportent chacune un élévateur à grain (66, 67), distinct, et un élévateur à grains (66) alimente la moitié avant et un élévateur à grains (67) alimente la moitié arrière du réservoir de grains (49).
